# EUROPEAN PATENT SPECIFICATION

(11) **EP 0 245 765 B1**
(45) Date of publication and mention of the grant of the patent: **22.09.1993**
(21) Application number: 87106567.8
(22) Date of filing: 06.05.1987
(51) Int. Cl.: H04L 12/28, H04L 12/54, H04L 12/58

(54) **Data transfer control system**
Datenübertragungssteuerungssystem
Système de commande de transfert de données

(30) Priority: 14.05.1986 JP 110201/86; 27.06.1986 JP 151189/86; 03.02.1987 JP 23193/87; 03.02.1987 JP 23194/87
(43) Date of publication of application: 19.11.1987
(73) Proprietor: MITSUBISHI DENKI KABUSHIKI KAISHA, Tokyo 100 (JP)
(72) Inventor: Matsumoto, Masahiro Mitsubishi Denki k.k., Kamakura-shi (JP); Watanabe, Akira Mitsubishi Denki k.k., Kamakura-shi (JP); Ohhashi, Kazuo Mitsubishi Denki k.k., Kamakura-shi (JP); Itao, Minoru Mitsubishi Denki k.k., Kamakura-shi (JP)
(74) Representative: Goddar, Heinz J., Dr.

(56) References cited:
- EP-A- 0 158 364
- US-A- 4 525 832
- ICC'84 LINKS FOR THE FUTURE SCIENCE, SYSTEMS & SERVICES FOR COMMUNICATIONS, IEEE International Conference on Communications, 14th-17th May 1984, Amsterdam, Proceedings, vol. 2, edited by P. Dewilde et al., pages 915-918, IEEE; R. YATSUBOSHI et al.: "Flexible network synchronization technology for ring networks"
- PATENT ABSTRACTS OF JAPAN, vol. 7, no. 214 (E-199)[1359], 21st September 1983 & JP-A-58 107 752
- INTERNATIONAL SWITCHING SYMPOSIUM, 25th-29th October 1976, Kyoto, vol. 2, pages 1-8, paper 441-3; T. EGAWA et al.: "A study on master-slave synchronization technique"

## Description

This invention relates to a data transfer control system, which permits realization of circuit switching with a network of a token ring system as a local area networks system with the features of the first part of claim 1.

EP-A-0 158 364 discloses a data transfer control system with the features of the first part of claim 1.

A primary object of the invention is to eliminate the data buffer underflow due to token excursion time variation and realize circuit switching with a token ring system network.

Another object of the invention is to provide, for the realization of circuit switching with the token ring system network, a synchronizing system, which permits establishment of synchronization between particular nodes in the network independently of the synchronization of the network as a whole and also of the communication speed in the network.

According to the invention, a predetermined amount of data is stored in a data buffer under control of a controller, and also data transfer from the data buffer is started after the lapse of a predetermined period of time from the instant of setting-up of a data transfer mode. Thus, no underflow occurs in the receiving side data buffer.

In this case, clock phase data is transmitted mutually as packets between nodes to establish the synchronization between the nodes.

Other objects, features and advantages of the invention will be apparent from the following description in conjunction with the accompanying drawings.
Fig. 1 is a block diagram showing an example of the construction of a node for carrying out the invention;
Fig. 2 is a flow chart showing an example of control sequence of a controller according to the invention;
Fig. 3 is a view showing a data transfer sequence in a network according to the invention;
Fig. 4 is a flow chart for a different embodiment of the invention;
Fig. 5 is a block diagram showing a node in an embodiment of the invention;
Fig. 6 is a block diagram showing an example of basic clock generation circuit;
Fig. 7 is a block diagram showing a different example of the basic clock generation circuit;
Fig. 8 is a timing chart illustrating the generation of the basic clock, operation of a frequency divider in a basic clock reproduction circuit and phase quantization;
Fig. 9 is a block diagram showing an example of the basic clock reproduction circuit;
Fig. 10 is a block diagram showing a different example of the basic clock generation circuit;
Fig. 11 is a view showing a list of error data obtained from a subtracter shown in Fig. 10;
Fig. 12 is a schematic representation of the detailed construction of a variable frequency divider shown in Fig. 10;
Fig. 13 is a time chart illustrating the operation of a variable frequency divider in case when slave phase delay is compensated for in Fig. 12;
Fig. 14 is a time chart illustrating the operation of a variable frequency divider in case when slave phase is leading master phase;
Fig. 15 is a view for explaining the conditions of a synchronizing system according to the invention;
Fig. 16 is a view showing a frame configuration in an embodiment of the invention;
Fig. 17 is a view for explaining the operation of a synchronizing system when basic clock reproduction means shown in Fig. 9 is used; and
Fig. 18 is a view for explaining the operation of a synchronizing system when basic clock reproduction means shown in Fig. 10 is used;
Prior to explaining specific embodiments of the invention, a construction for realizing circuit switching with a token ring system network while preventing underflow under the assumption of presence of synchronization will be explained, and then a synchronizing system for realizing the synchronization will be described.

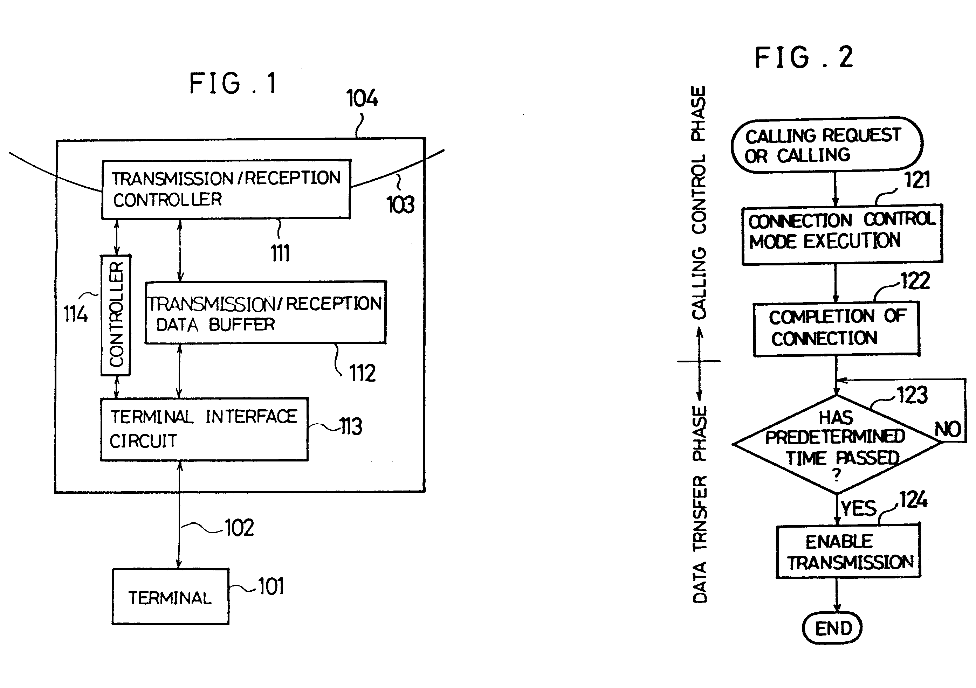

Fig. 1 is a block diagram showing an example of a node for carrying out the invention. There is shown a node 104, which comprises a ring transmission/reception control section 111 provided on a ring transmission line 103 for controlling transmission, reception, reproduction and repeating of transfer data, a transmission/reception data buffer 112 for temporarily storing transfer data, a terminal interface circuit 113 serving as an interface with respect to a terminal 101 and a controller 114 for collectively controlling the components 111 to 113. In this example, the terminal 101 is an exclusive transmission terminal, and it is connected through a terminal interface line 102 to the terminal interface circuit 113 of the node 104.

The present invention concerns a data transfer control system in the controller 114 shown in Fig. 1, and an example of control sequence according to the invention will now be described with reference to the flow chart of Fig. 2.

Fig. 2 shows an initial operation of the controller 114 until it is ready to start transmission of data from the terminal 101 to the ring transmission line 103 in response to a calling request from the terminal 101 or reception of a calling from a different node. As soon as a data transfer mode is set up after completion of a calling control mode (steps 121 and 122), transmission data from the terminal 101 starts to be fed to the transmission/reception data buffer 112 in the node 104, but the transmission of data to the ring transmission line 103 in a step 124 is enabled only after the lapse of a predetermined period of time in a step 123. More specifically, assuming the predetermined period to be t_{w} and the operation speed of the terminal interface to be X bits/sec., the amount of data that is first sent out to the ring transmission line 103 is X·t_{w} bits, and subsequently data stored in the transmission/reception data buffer 112 is sent out to the ring transmission line 103 every time of token arrival. The amount of data stored in the transmission/reception data buffer 112, is proportional to the elapsed time. Therefore, the judgement in the step 123 may be replaced with a check as to whether the predetermined data amount X·t_{w} is reached by the data stored in the transmission/reception data buffer 112. Further, the storage capacity of the transmission/reception data buffer 112 should be over X·t_{w} bits.

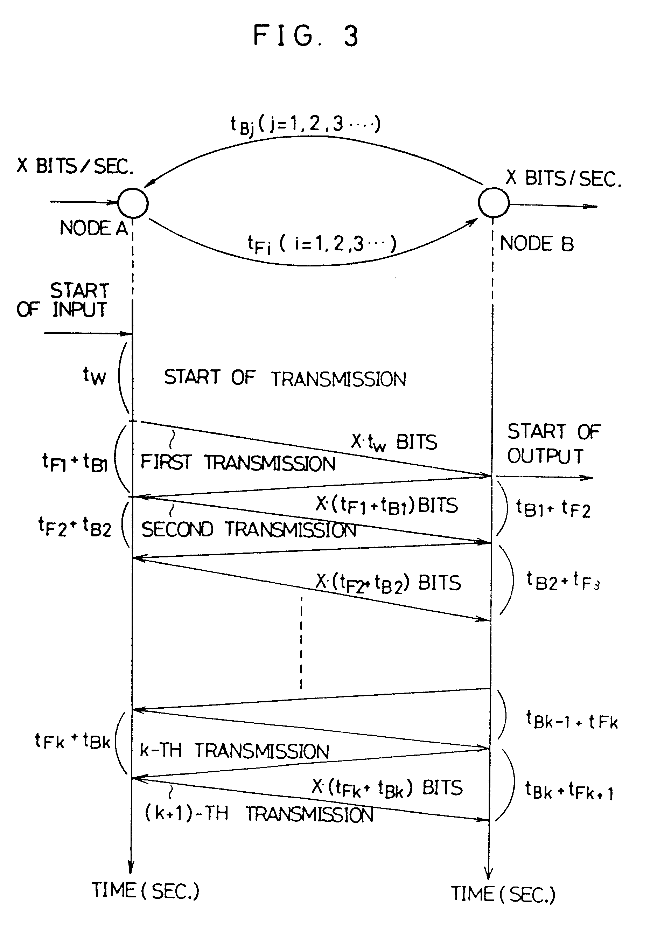

Next, the method of calculation of the predetermined period of time t_{w} will be described. Fig. 3 shows the manner of data transfer from node A to node B. Data flows from the terminal into the node A at a speed of X bits/sec., and data flows out from the node B into the terminal at the same speed of X bits/sec. The delay time from the node A to the node B is denoted by t_{Fi} (i = 1, 2, 3, ...), and the delay time from the node B to the node A is denoted by t_{Bj} (j = 1, 2, 3, ...), where i and j represent the number of token excursions effected after the start of ring transmission. Assuming that transmission of data to the ring transmission line has been started after the lapse of t_{w} seconds from the start of flow-in of data from the terminal, X·t_{w} bits of data are transferred to be received in the node B. The node B starts to provide data to the terminal at the speed of X bits/sec. as soon as X·t_{w} bits are received. Subsequently, the node A continues transmission to the ring transmission line while securing the token for every excursion. The amount of data that is remaining in the reception data buffer immediately before the node B receives new data in the n-th excursion form the ring transmission line in this situation is

${\text{X·(t}}_{\text{w}} {\text{- t}}_{\text{B1}} {\text{- t}}_{\text{F2}} {\text{+ t}}_{\text{F1}} {\text{+ t}}_{\text{B1}} {\text{+ t}}_{\text{B2}} {\text{- t}}_{\text{F3}} {\text{... - t}}_{\text{Bn-2}} {\text{- t}}_{\text{Fu-1}} {\text{+ t}}_{\text{Fu-2}} {\text{+ t}}_{\text{Bn-2}} {\text{- t}}_{\text{Bn-1}} {\text{- t}}_{\text{Fu}} \text{) bits}$

or, in a rearranged form,

${\text{X·(t}}_{\text{w}} {\text{+ t}}_{\text{F1}} {\text{- t}}_{\text{Fu-1}} {\text{- t}}_{\text{Bn-1}} {\text{- t}}_{\text{Fu}} \text{) bits.}$

If this value is negative, there is an underflow in the data buffer. The underflow can be eliminated by satisfying a condition

${\text{t}}_{\text{w}} {\text{+ t}}_{\text{T·1}} {\text{- t}}_{\text{Fu-1}} {\text{- t}}_{\text{Bn-1}} {\text{- t}}_{\text{Fu}} \text{> 0}$

or ${\text{t}}_{\text{w}} {\text{> (t}}_{\text{Fu-1}} {\text{+ t}}_{\text{Bn-1}} {\text{) + (t}}_{\text{Fu}} {\text{- T}}_{\text{F1}} \text{)}$ . The maximum values of t_{Fu-1} + t_{Bn-1} and t_{Fu} - t_{F1} are respectively t_{F} (MAX) + t_{B} (MAX) and t_{F} (MAX) - t_{F} (MIN). The former value corresponds to the maximum token excursion time, while the latter corresponds to the maximum inter-node forward delay time. However, there is a case where the adjacent node is in the opposite direction to the direction, in which data is transmitted. Therefore, it will be seen that in the worst case double the maximum token excursion time suffices as the predetermined delay t_{w}.

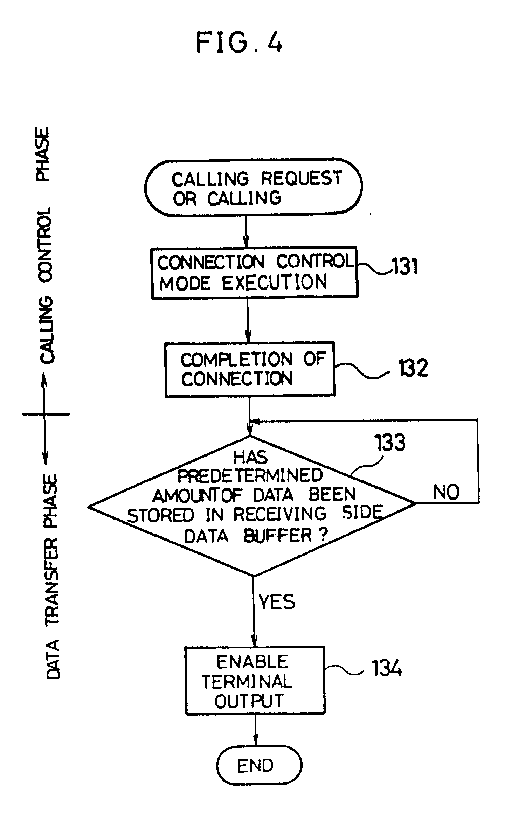

In the above embodiment, the system according to the invention is realized with the transmitting side data buffer. However, as shown in Fig. 4, it is also possible to realize the invention with the receiving side data buffer, as shown in steps 131 to 134 of the flow chart of Fig. 4. Further, the same effects as in the above embodiment may be obtained by arranging such that the predetermined delay t_{w} is provided collectively by the transmitting and receiving side data buffers on the basis of the flow charts of Figs. 2 and 4.

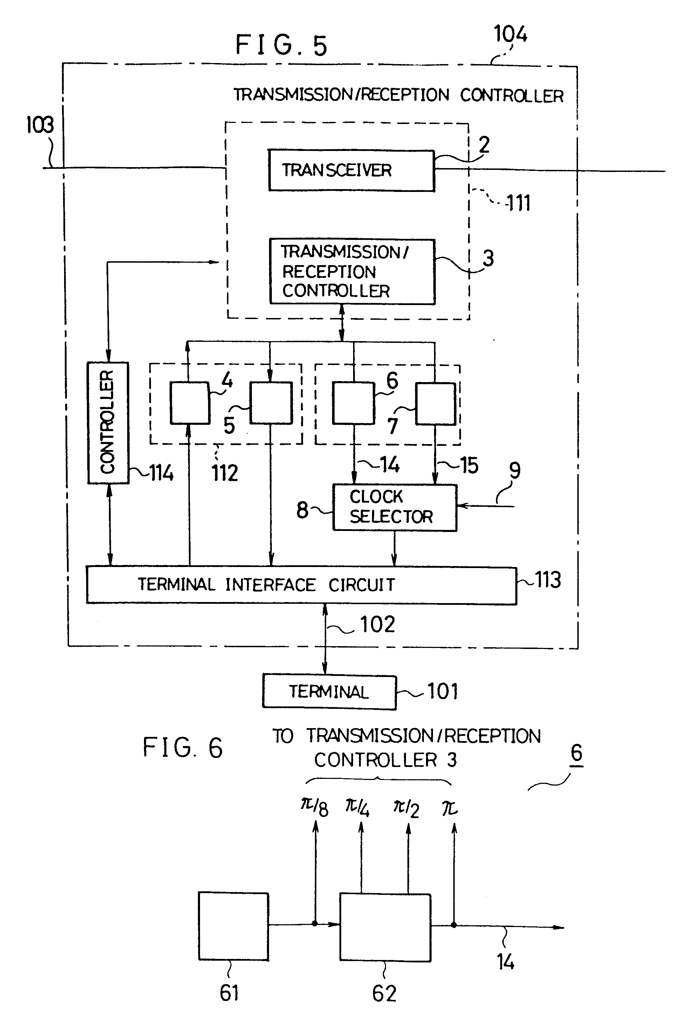

Now, a synchronizing system according to the invention will be described. Fig. 5 is a block diagram showing an essential part of the node according to the invention inclusive of a synchronizing circuit. Referring to the Figure, the node 104 is connected by a transceiver 2 to a transmission line 103 constituting a network. Reference numeral 3 designates a transmission/reception controller having functions of medium access control in conformity to the network system and control of transmission and reception of data including basic clock phase data to be described later. Reference numeral 4 designates a transmitting side data buffer, in which is temporarily stored transmission data from the terminal 101 connected to the node through the terminal interface line 102. The data stored in the transmitting side data buffer 4 is sent out as bursts to the transmission line 103 when the node 104 secures a right of transmission with arrival of token or the like. Reference numeral 5 designates a receiving side data buffer, which receives and stores data addressed to the terminal 101 from the transmission line 103 and sends out the stored data continuously to the terminal 101. The speed of communication on the transmission line 103 is sufficiently high compared to the communication speed of the terminal 101, and a continuous data stream on the terminal interface line 102 corresponds to a data stream of data flowing burst-wise (or intermittently) in a time-compressed form through the transmission line 103. Reference numeral 6 designates a basic clock generator, and 7 a basic clock reproduction circuit, which is a featuring circuit as means for realizing the synchronizing system according to the invention. In this embodiment, the function of the basic clock generator 6 is utilized when the node 104 is a clock master, while the function of the basic clock reproduction circuit 7 is utilized when the node is a clock slave. Reference numeral 8 designates a clock selector for supplying, to the terminal 101, either a master clock 14 of the basic clock generator 6 or a slave clock 15 of the basic clock reproduction circuit 7 according to a selector control 9 set by the operator or the like. It is conceivable to supply both the master and slave clocks 14 and 15 to the terminal 101 for the respective transmitting and receiving functions of the terminal 101. However, the clock selection is irrelevant to the subject matter of the invention. Reference numeral 113 designates a terminal interface circuit providing interface with respect to the transmitting and receiving side data buffers 4 and 5, clock selector 8 and terminal 101. As the terminal interface line 102, a standard interface, e.g., "RS232C", is provided to the terminal 101.

Fig. 6 shows an example of the basic clock generator 6 in this embodiment. Referring to the Figure, reference numeral 61 designates an oscillator, and 62 a frequency divider for providing intermediate value outputs. The frequency divider 62 is a one-eighth frequency divider. Its last stage output serves as a master clock 14 supplied to the terminal 101, and a 4-bit digital value of individual frequency division stages of π/8, π/4, π/2 and π is supplied as phase data of the master clock 14 to the transmission/reception controller 3. In other words, the frequency divider 62 permits a function of generating the master clock 14 and a function of generating the digital phase data of the master clock to be realized with a single circuit.

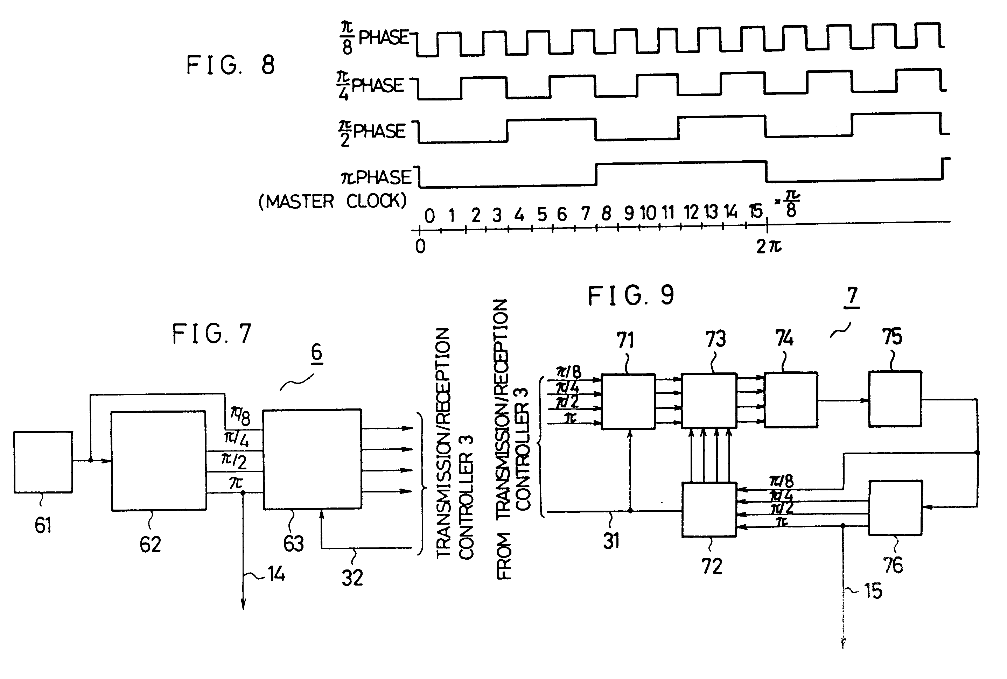

Fig. 7 is a view showing a specific example of the basic clock generator 6 in the embodiment. Referring to the Figure, reference numeral 61 designates an oscillator, 62 a frequency divider for providing intermediate value outputs, and 63 a master side master phase register for holding digital phase data of the frequency divider 62.

In this example, the frequency divider 62 is a one-eighth frequency divider. Its last stage output serves as master clock 14 supplied to the terminal 101, and a 4-bit digital value of individual frequency division stages π/8, π/4, π/2 and π is supplied as digital phase data of the master clock 14 to the master side master phase register 63.

In this case, every time the transmission of a phase data packet to the network is started, the contents of the master side master phase register 63 are updated according to a phase data transmission start pulse 32 provided from the transmission/reception controller 3, and the updated contents of the master side master phase register 63, i.e., the digital phase data of the master clock 14 at the packet transmission start instant, are transmitted as the contents of the packet to the network. In this case, the frequency divider 62 permits a function of generating the master clock 14 and a function of generating the digital phase data to be realized with a single circuit.

Fig. 8 shows the input to and intermediate and last stage outputs of the frequency divider 62, i.e., a time chart of the master clock 14, indicating that the phase of one cycle (2π) of the master clock is digitalized in π/8 step, i.e., 4 bits. As the phase data of the master clock 14, the master node transmits the newest digital phase data, i.e., digital phase data at the instant of start of transmission.

Fig. 9 is a view showing an example of the basic clock reproduction circuit 7 in the embodiment. Referring to the Figure, reference numeral 71 designates a 4-bit master phase register for holding the digital phase data which is transmitted from the master node and supplied through the transmission/reception controller 3, and 72 a slave phase register for holding the digital phase data of the slave clock 15. The contents of the registers 71 and 72 are updated according to a phase data reception pulse 31 which is provided from the transmission/reception controller 3 every time the master phase data is received. Reference numeral 73 designates a substracter which provides the phase difference between the contents of the registers 71 and 72. This phase difference is converted in a digital-to-analog (D/A) converter 74 into an analog voltage which is supplied to a voltage-controlled oscillator (VCO) 75 to control the oscillation frequency thereof. The output of the VCO 75 is supplied to a frequency divider 76 similar to the frequency divider shown in Fig. 7. The frequency divider 76 generates the slave clock 15 supplied to the terminal 101 as well as the digital phase data of the slave clock 15, these data being supplied to the slave phase register 72. The basic clock reproduction circuit 7 is basically the same as the prior art PLL except for that the phase data is sampled and compared, and the slave phase can be locked to the master phase on the basis of the sampling theorem so far as the variation of the phase difference is sufficiently small compared to the sampling period.

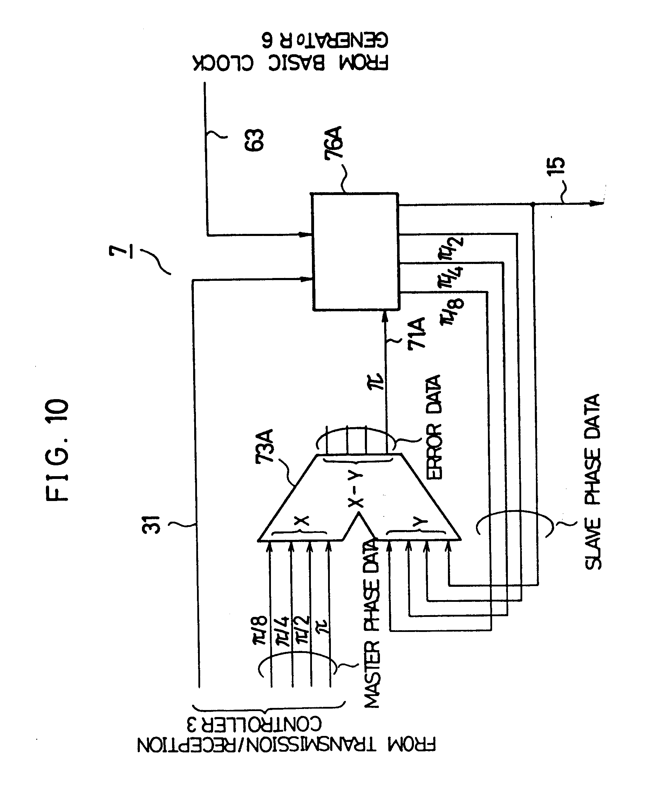

Fig. 10 is a view showing a second example of the basic clock reproduction circuit 7. Reference numeral 76A in the Figure designates a variable frequency divider for frequency dividing a reproduction clock with a predetermined ratio to provide the slave clock 15 while also providing slave phase data, and 73A a subtracter as an operational circuit for performing subtraction of master phase data transmitted from the master node and supplied through the transmission/reception controller 3 and the slave phase data to obtain the difference between the master and slave phase data and supplying the error data thus obtained either entirely or partly as phase control data to the frequency divider 76A.

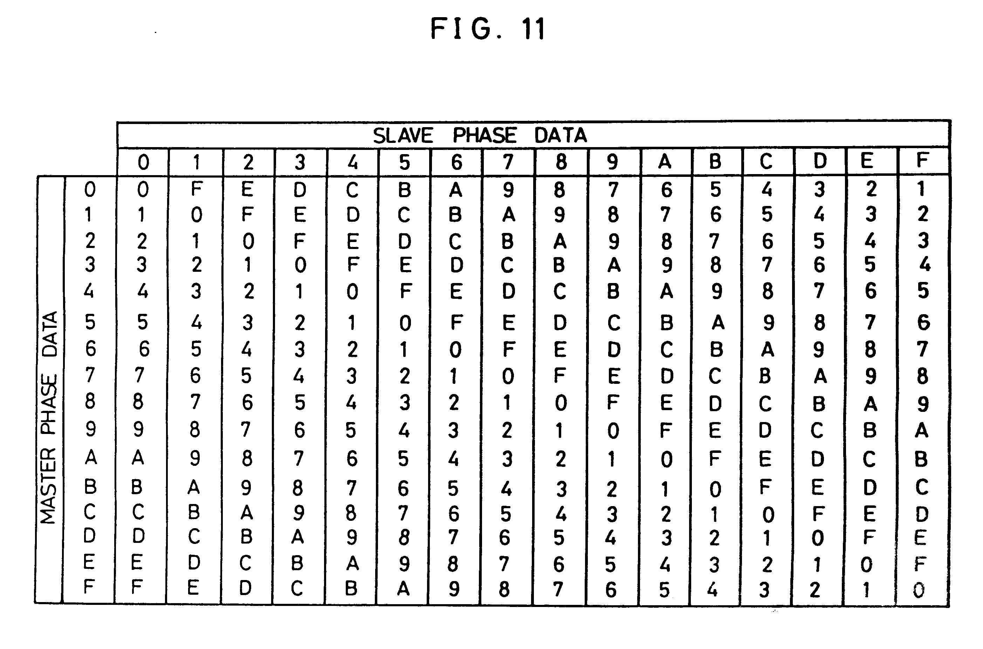

With the above construction, every time the master phase data is received, a phase data reception pulse 31 is generated to be supplied to the variable frequency divider 76A to hold the value of the phase control data 71A at that moment. The variable frequency divider 76A adjusts the slave phase according to the held value to hold constant the error between the master and slave phases. More specifically, if the slave phase is lagging behind the master phase, the phase control data 71A has a positive value. In this case, the variable frequency divider 76A reduces the frequency division ratio to advance the slave phase. If the slave phase is leading the master phase, the phase control data 71A has a negative value. In this case, the variable frequency divider 76A increases the frequency division ratio to retard the slave phase. Fig. 11 shows a list of the error data, and in which 4-bit phase data are shown hexadecimally. It will be seen from Fig. 11 that the slave phase is the same as or lagging behind the master phase when the error data is 0 to 7 (i.e., positive) and is leading the master phase when the error data is 8 to F (i.e., negative). Therefore, it is possible to control the variable frequency divider 76A by utilizing only the sign bit (i.e., π phase data) of the error data. In the case of Fig. 10, the π phase of the error data is utilized as the phase control data 71A.

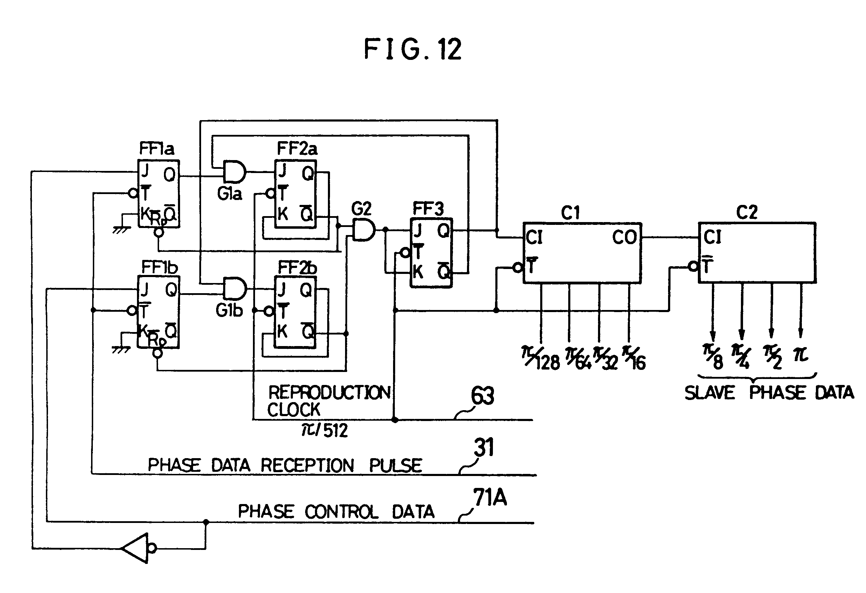

Fig. 12 shows an example of the detailed construction of the variable frequency divider 76A. This circuit construction is well known.

Referring to Fig. 12, if the output of an AND gate G2 is "H" at all time, a J-K flip-flop FF3 merely frequency divides the reproduction clock 63 into one-half and constitutes a one-512-nd frequency divider with succeeding stage synchronous 4-bit counters C1 and C2.

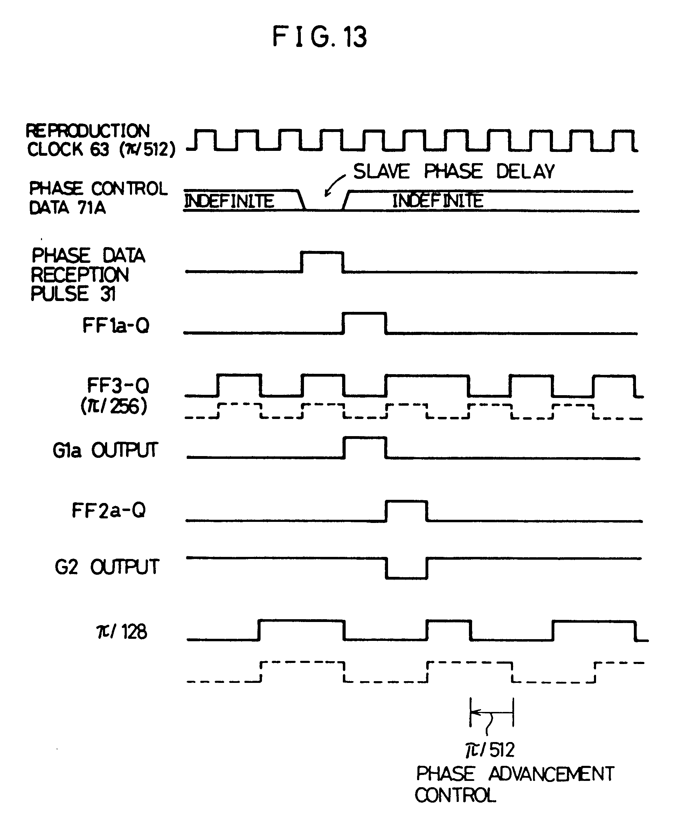

Fig. 13 is a time chart illustrating the operation of the variable frequency divider 76A when compensating for the delay of the slave phase.

Now, the operation of the variable frequency divider shown in Fig. 12 will be explained with reference to Fig. 13.

When the slave phase is lagging behind the master phase, the phase control data 71A is "L", and a flip-flop FF1a is set with the trailing end (fall) of the phase data reception pulse 31. When the Q output of the flip-flop FF1a goes to "H" while the Q output of a flip-flop FF3 is "L", the AND condition is met, and the output of the AND gate G1a goes to "H". When a reproduction clock 63 is generated in this state, the Q output of the flip-flop FF3 goes to "H" with the trailing end (fall) of the clock. At the same time, the Q output of the flip-flop FF2a goes to "H", and the flip-flop FF1a is reset. When the flip-flop FF2 is in the set state, the output of the AND gate G2 goes to "L". Therefore, the flip-flop FF3 remains in the same state to hold Q = "H" when the next reproduction clock pulse is generated. Thus, a carry input (CI) is supplied for two consequtive clock pulses to the next stage synchronous 4-bit counter C1 to effect phase advancement control corresponding to π/512. In Fig. 13, a dashed line shows the operation of the flip-flop FF3 and counter C1 (output corresponding to π/128) in the absence of variable frequency division control.

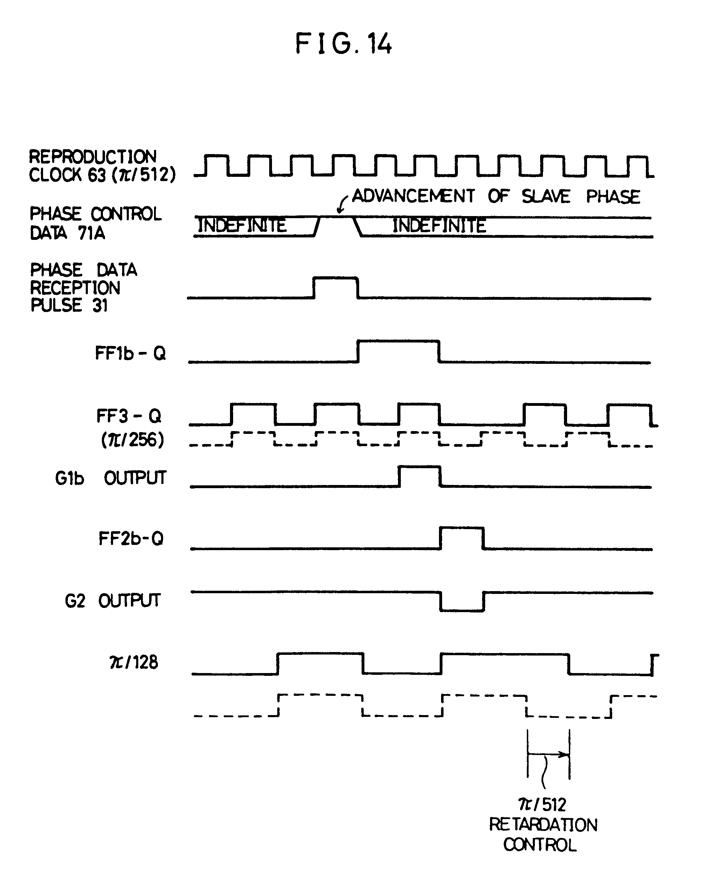

Fig. 14 is a time chart illustrating the operation of the variable frequency divider when the slave phase is leading the master phase. This operation is not described in detail.

Through the above variable frequency division control, the slave phase is controlled to follow the master phase transmitted through a packet multiplex network.

The number of frequency division stages of the variable frequency divider 76A and bit width of the master and slave phase data are suitably determined from the difference between the transmission and reception clocks, master phase transfer interval and allowable error between the master and slave phases.

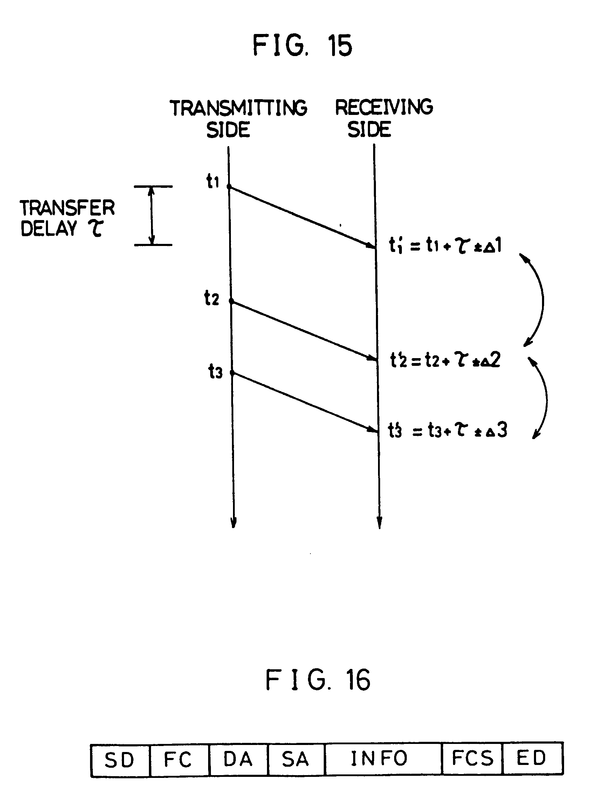

Now, the synchronizing system will be described with reference to Figs. 15 to 18.

As shown in Fig. 15, the synchronizing system according to the invention permits present time data tₙ measured under control of the transmitting side clock (i.e., master clock) to be transmitted as phase data to the receiving side to correct the leading or lagging error ±Δₙ of the receiving side clock (i.e., slave clock) t'ₙ , wherein the slave clock is synchronized to the master clock. At this time, the transfer delay τ has to be constant, but the transfer interval ${\text{t}}_{\text{n+1}} {\text{- t}}_{\text{n}}$ need not be constant, and the maximum transfer interval is determined by the extent of the error between the transmission and reception clocks. Regarding the transfer delay τ, as is obvious from a frame configuration as shown in Fig. 16, when the frame category FC represents the timing frame, data INFO is the phase data of the master clock. In this embodiment, this data is a fixed length of 4 bits, so that the frame constitutes a packet having a fixed length. Thus, the transfer delay τ is constant. Further, in a packet multiplex network, e.g., a token ring or token bus network, the upper limit of the transmission waiting time of each node is guaranteed by the excursion of the token or the like. Therefore, the above condition is met by making the constituent elements of the basic clock generator 6 and basic clock reproduction circuit 7 to be as precise as to be able to allow error between the transmission and reception clocks even when the transmission waiting time is maximum. Thus, the slave clock can be synchronized to the master clock on the receiving side by receiving the transmitting side present time data and correcting the slave clock such that ${\text{t}}_{\text{n+1}} {\text{- t}}_{\text{n}} {\text{= t'}}_{\text{n+1}} {\text{- t'}}_{\text{n}}$ 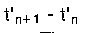 , i.e., error Δₙ, is constant.

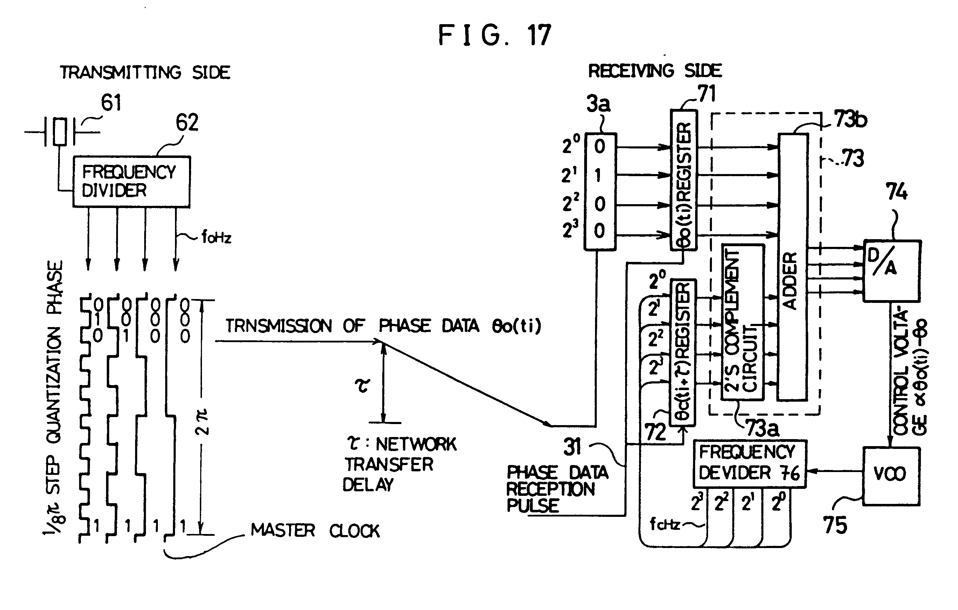

The operation of the synchronizing system will now be described in detail with reference to Fig. 17. The oscillation frequency of an oscillator 61 is frequency divided by a frequency divider 62 on the transmitting side, thus producing a master clock at a frequency of f₀ Hz and phase data ϑ₀ obtained through quantization in 1/8π step. Phase data ϑ₀ at the time tᵢ of transmission is sampled and transmitted as data tᵢ in a frame configuration as shown in Fig. 16 to the network. This phase data ϑ₀ (tᵢ) reaches the receiving side after network transfer delay τ and is subjected to serial-to-parallel conversion in a receiving register 3a in the transmission/reception controller 3. At this instant, a phase data reception pulse 31 based on the frame category FC of the received frame is generated from the transmission/reception controller 3. At this time, the phase data ϑ₀ (tᵢ) is held in a master phase register 71, and phase data ${\text{ϑ}}_{\text{c}} {\text{(t}}_{\text{i}} \text{+ τ)}$ of the f_{c}-Hz slave clock at instant tᵢ + τ is sampled and held in a slave phase register 72. The phase data ϑ₀ (tᵢ) and ${\text{ϑ}}_{\text{c}} {\text{(t}}_{\text{i}} \text{+ τ)}$ held in the registers 71 and 72 are supplied to a subtracter 73 consisting of a complement circuit 73a and an adder 73b to obtain the phase difference between these two data. The phase difference is provided as digital data to a D/A converter 74 for conversion into analog data. The analog data is impressed as a control voltage proportional to the phase difference ${\text{ϑ₀ (t}}_{\text{i}} {\text{)-ϑ}}_{\text{c}} {\text{(t}}_{\text{i}} \text{+ τ)}$ 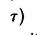 to a voltage-controlled oscillator 75. In the voltage-controlled oscillator 75, its oscillation frequency is controlled according to the control voltage such that the phase difference is constant, and its output is supplied to a frequency divider 76. The frequency divider 76 frequency divides the oscillation frequency to generate a slave clock synchronized to the master clock and also phase data ϑ_{c} of the slave clock to be ready for the timing of reception of the next phase data reception pulse 31.

The conditions required for the synchronization are that the network transfer delay τ is constant and that the minimum sampling frequency ${\text{1/(t}}_{\text{n+1}} {\text{- t}}_{\text{n}} {\text{)}}_{\text{max}}$ 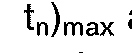 as specified by the transfer interval ${\text{t}}_{\text{u+1}} {\text{- t}}_{\text{n}}$ is at least double the maximum difference between the master and slave clock frequencies f₀ and f_{c} in accordance with the sampling theorem. The transfer delay τ is constant as noted before, and by making the phase difference variation sufficiently small compared to the sampling cycle period by ensuring high accuracy of the individual clocks, the slave phase can be locked to the master phase, and it is possible to establish synchronization between particular nodes installed in a spaced-apart relation to one another via a network by permitting transmission of master phase data through the network.

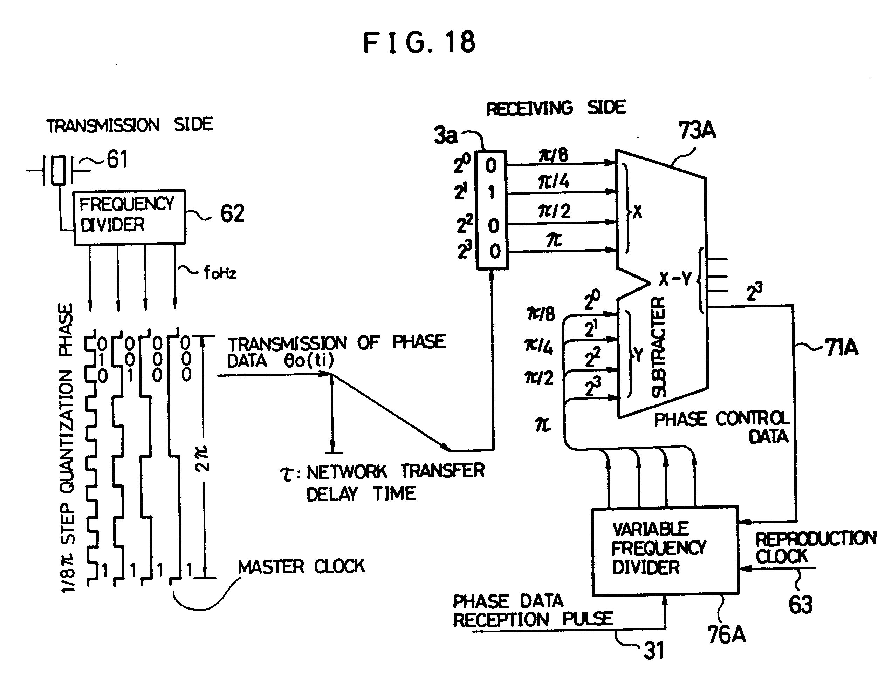

Fig. 18 shows a synchronizing system in case when the circuit shown in Fig. 5 is used as basic clock generation means. In this case, phase data ϑ₀ transmitted in the frame configuration to the network reaches the receiving side after the network transfer delay τ and is subjected to serial-to-parallel conversion in the receiving register 3a in the transmission/reception controller 3. At this instant, a phase data reception pulse 31 based on the frame category FC of the reception frame is generated from the transmission/reception controller 3, and phase control data 71A obtained from a subtracter 73A is supplied at this timing to a variable frequency divider 76A for the variable frequency division control as noted above. In this way, the slave phase can be synchronized to the master phase.

Circuit switching can be realized in a packet multiplex network if clock synchronization between nodes can be established.

With the synchronizing system according to the invention, it is possible to realize the following three different synchronizing systems based on address DA of the frame configuration as shown in Fig. 11.
(1) The entire system is synchronized to a single master when DA is broadcast address data.
(2) Synchronization is done for each group having a master when DA is multicast address data.
(3) Synchronization can be established for each mating pair of nodes when DA is individual address data.

More specifically, it is possible to provide a prior art network with a function of circuit switching at a given communication speed without need of any particular controller for controlling the entire network (case 1). Also, it is possible to form a network where different synchronizing systems co-exist, which has heretofore been impossible (cases 2 and 3). In this case, circuit switching at a given communication speed can be realized between mating nodes independently of the synchronization of the network as a whole and also of the communication speed.

In the above description, the oscillator 61 is provided in the basic clock generator 6. However, it is possible to process a clock supplied from the outside of the node like the output of the oscillator 61 for establishing synchronization between nodes under the control of the external clock.

Further, while the node 104 described above includes both the basic clock generator 6 and basic clock reproduction circuit 7. However, depending on the node it is possible to provide only either one of these two circuits.

When the synchronizing system as described is adopted, it is possible to establish synchronization for circuit switching in a packet multiplex network, e.g., a token ring or token bus network, without need of dependency on the synchronization of the network as a whole and also on the communication speed in the network.

While a preferred embodiment of the invention has been described using specific terms, such description is for illustrative purpose only, and it is to be understood that changes and variations may be made without departing from the scope of the following claims.

The features disclosed in the foregoing description, in the claims and/or in the accompanying drawings may, both separately and in any combination thereof, be material for realising the invention in diverse forms thereof.

## Claims

1. A data transfer control system for performing data transfer control of a token ring system, in which the upper limit of the transmission waiting time of each node (104) is guaranteed, said each node (104) serving to pass data from/to an associated terminal (101) connected thereto to/from said network and including a data buffer (112) for temporarily storing said data therein, the timing of transmission of data to the network being controlled to produce a constant delay, and a phase data of a basic clock generated from a basic clock generating means being transmitted to a different node (104), characterized by a controller (114) for controlling a call control between the nodes (104) and data transfer control for said data buffer (112), and basic clock generating means (6) for generating a basic clock to said terminal (101), said controller (114) serving to control the timing of transmission of data to said network to produce the constant delay time, wherein the phase data of the basic clock generated by said basic clock generating means (6) are transmitted using a packet to the different node (104) to obtain synchronization of the basic clock for transferring the data between said different node (104) and a terminal (101) connected thereto.

2. The data transfer control system according to claim 1, wherein said constant delay time is double the maximum token excursion time through the token ring.

3. The data transfer control system according to claim 1, wherein the transmission of data from a transmitting side data buffer (4) to the ring transmission line (103) is started after a predetermined delay time.

4. The data transfer control system according to claim 1, wherein the transmission of data from a receiving side data buffer (5) to the terminal (101) is started after a predetermined delay time.

5. The data transfer control system according to claim 1, wherein the transfer of data from the transmitting side data buffer (4) to the ring transmission line (103) and transfer of data from the receiving side data buffer (5) to the terminal (101) are started after delay times constituting altogether a predetermined delay time.

6. The data transfer control system according to claim 1, wherein a node (104) functioning as a synchronization master when establishing clock synchronization between nodes includes basic clock generation means (8) for supplying a basic clock to an associated node and generating phase data of said basic clock as digital data consisting of predetermined bits, said digital phase data being sent out as a packet to the network, a node functioning as a synchronization slave includes basic clock reproducing means (7) functioning with said digital phase data received through the network as a goal of control to reproduce a clock synchronized to said basic clock, and synchronization between particular nodes is established by supplying the reproduced clock to the associated terminal (101).

7. The data transfer control system according to claim 1, wherein each node (104) includes both basic clock generating means (6) and basic clock reproducing means (7).

8. The data transfer control system according to claim 1, wherein each node (104) includes either basic clock generating means (6) or basic clock reproducing means (7).

9. The data transfer control system according to claim 1, wherein said basic clock generating means (6) includes an oscillator (61) and a frequency divider (62) for frequency dividing the frequency of the output of said oscillator (61) and also providing digital values of individual frequency division stages to form phase data of said basic clock.

10. The data transfer control system according to claim 1, wherein said basic clock generating means (6) includes a frequency divider (62) for frequency dividing an externally supplied clock to generate a basic clock supplied to the terminal (101) while providing digital values of individual frequency division stages to form phase data of said basic clock.

11. The data transfer control system according to claim 6, wherein said basic clock reproducing means (7) includes a master phase register (71) for holding digital phase data received through the network, a voltage-controlled oscillator (75) with the oscillation frequency thereof controllable according to a control voltage, a frequency divider (76) for frequency dividing the output frequency of said oscillator (75) to generate a clock to be supplied to the terminal (101) while also providing digital values of individual frequency division stages to generate phase data of said clock, a slave phase register (72) for holding digital phase data provided from said frequency divider (76), a subtracter (73) for performing subtraction of the outputs of said master (71) and slave phase registers (72) to provide the phase difference, and a digital-to-analog converter (74) for converting the digital output of said subtracter (73) into an analog voltage to be supplied as a control voltage of said voltage-controlled oscillator (75).

12. The data transfer control system according to claim 1, wherein said basic clock generating means (6) includes a variable frequency divider (76A) capable of clock division ratio variation and an operation circuit (73A) for controlling the frequency division ratio of said variable frequency divider (76A) through comparison of the master phase received through the network and the slave phase generated in said variable frequency divider (76A) in the receiving node, thus permitting said slave phase to follow said master phase.

## Patentansprüche

1. Datenübertragungssteuerungssystem zum Durchführen einer Datenübertragung eines Tokenringsystems, in welchem die Obergrenze der Übertragungswartezeit jedes Knotenpunktes (104) garantiert ist, wobei jeder Knotenpunkt (104) dem Passieren der Daten von/zu einem dazugehörigen, damit verbundenen Anschluß (101) zu/von besagtem Netzwerk dient und einen Datenpuffer (112) zum zeitweisen Speichern besagter Daten enthält, das Timing der Datenübertragung zu dem Netzwerk gesteuert ist, um eine konstante Verzögerung herzustellen, und von einem Grundtakterzeugungsmittel erzeugte Phasendaten eines Grundtaktgebers zu einem anderen Knotenpunkt (104) übertragen werden, gekennzeichnet durch eine Steuerung (114) zum Steuern einer Abrufsteuerung zwischen den Knotenpunkten (104) und der Datenübertragungssteuerung für besagten Datenpuffer (112) und das Grundtakterzeugungsmittel (6) zum Erzeugen einer Grundtaktrate für besagten Anschluß (101), wobei besagte Steuerung (114) dem Steuern des Timings der Datenübertragung zu besagtem Netzwerk dient, um eine konstante Verzögerungszeit zu liefern, und die von besagtem Grundtakterzeugungsmittel (6) erzeugten Phasendaten des Grundtaktgebers zu dem anderen Knotenpunkt (104) unter Benutzung eines Pakets übertragen werden, um Synchronisation des Grundtakts zur Datenübertragung zwischen besagtem anderen Knotenpunkt (104) und einem damit verbundenen Anschluß (101) zu erhalten.

2. Datenübertragungssteuerungssystem nach Anspruch 1, dadurch gekennzeichnet, daß besagte konstante Verzögerungszeit doppelt so lang wie die maximale Tokenumlaufzeit durch den Tokenring ist.

3. Datenübertragungssteuerungssystem nach Anspruch 1, dadurch gekennzeichnet, daß die Datenübertragung von einem übertragungsseitigen Datenpuffer (4) zu der Ringübertragungsleitung (103) nach einer vorherbestimmten Verzögerungszeit gestartet wird.

4. Datenübertragungssteuerungssystem nach Anspruch 1, dadurch gekennzeichnet, daß die Datenübertragung von einem empfangsseitigen Datenpuffer (5) zu dem Anschluß (101) nach einer vorherbestimmten Verzögerungszeit gestartet wird.

5. Datenübertragungssteuerungssystem nach Anspruch 1, dadurch gekennzeichnet, daß die Datenübertragung von dem übertragungsseitigen Datenpuffer (4) zu der Ringübertragungsleitung (103) und die Datenübertragung von dem empfangsseitigen Datenpuffer (5) zu dem Anschluß (101) nach Verzögerungszeiten gestartet werden, die zusammen eine vorherbestimmte Verzögerungszeit bilden.

6. Datenübertragungssteuerungssystem nach Anspruch 1, dadurch gekennzeichnet, daß ein Knotenpunkt (104), der als ein Hauptsynchronisator beim Erreichen einer Taktsynchronisation zwischen den Knotenpunkten fungiert, das Grundtakterzeugungsmittel (8) zum Liefern eines Grundtakts an einen dazugehörigen Knotenpunkt und zum Erzeugen von Phasendaten von besagtem Grundtakt als Digitaldaten enthält, wobei besagte Digitalphasendaten aus vorherbestimmten Bits bestehen und als ein Paket dem Netzwerk zugesendet werden; daß ein Knotenpunkt, der als Nebensynchronisator fungiert, ein Grundtaktreproduktionsmittel (7) enthält, das mit besagten über das Netzwerk erhaltenen Digitalphasendaten auf das Steuerungsziel zuarbeitet, einen mit besagtem Grundtakt synchronisierten Takt zu reproduzieren; und daß Synchronisation zwischen bestimmten Knotenpunkten durch Lieferung der reproduzierten Taktrate an den angeschlossenen Anschluß (101) erreicht wird.

7. Datenübertragungssteuerungssystem nach Anspruch 1, dadurch gekennzeichnet, daß jeder Knotenpunkt (104) sowohl ein Grundtakterzeugungsmittel (6) als auch ein Grundtaktreproduktionsmittel (7) enthält.

8. Datenübertragungssteuerungssystem nach Anspruch 1, dadurch gekennzeichnet, daß jeder Knotenpunkt (104) entweder ein Grundtakterzeugungsmittel (6) oder ein Grundtaktreproduktionsmittel (7) enthält.

9. Datenübertragungssteuerungssystem nach Anspruch 1, dadurch gekennzeichnet, daß besagtes Grundtakterzeugungsmittel (6) einen Oszillator (61) und einen Frequenzteiler (62) zum Frequenzteilen der Frequenz des Ausgangs besagten Oszillators (61) und auch zum Liefern digitaler Werte von individuellen Frequenzteilungsstadien enthält, um Phasendaten von besagtem Grundtakt zu bilden.

10. Datenübertragungssteuerungssystem nach Anspurch 1, dadurch gekennzeichnet, daß besagtes Grundtakterzeugungsmittel (6) einen Frequenzteiler (62) zum Frequenzteilen einer extern gelieferten Taktrate enthält, um einen Grundtakt zu erzeugen, der an den Anschluß (101) weitergeben wird, während Digitalwerte von individuellen Frequenzteilungsstadien bereitgestellt werden, um Phasendaten von besagtem Grundtaktgeber zu bilden.

11. Datenübertragungssteuerungssystem nach Anspurch 6, dadurch gekennzeichnet, daß besagtes Grundtaktreproduktionsmittel (7) ein Hauptphasenregister (71) zum Halten von über das Netzwerk empfangenen Digitalphasendaten, einen spannungsgesteuerten Oszillator (75) mit einer Oszillationsfrequenz, die in Übereinstimmung mit einer Steuerspannung steuerbar ist, einen Frequenzteiler (76) zum Frequenzteilen der Ausgangsfrequenz von besagtem Oszillator (75) zum Erzeugen eines an den Anschluß (101) weiterzugebenden Takts, während auch Digitalwerte von individuellen Frequenzteilungsstadien geliefert werden, um Phasendaten von besagtem Takt zu erzeugen, ein Nebenphasenregister (72) zum Halten der von besagtem Frequenzteiler (76) gelieferten Digitalphasendaten, einen Subtrahierer (73) zum Durchführen einer Subtraktion von besagtem Hauptphasenregister (71) und besagtem Nebenphasenregister (72), um den Phasenunterschied zu liefern, und einen Digital-Analog-Wandler (74) zum Wandeln des digitalen Ausgangs von besagtem Subtrahierer (73) in eine analoge, als eine Regelspannung dem besagten spannungsgesteurten Oszillator (75) zuzuführenden Spannung enthält.

12. Datenübertragungssteuerungssystem nach Anspruch 1, dadurch gekennzeichnet, daß besagtes Grundtakterzeugungsmittel (6) einen variablen Frequenzteiler (76A), der Änderungen des Taktteilungsverhältnisses durchführen kann, und einen Operationsregelkreis (73A) zum Steuern des Frequenzteilungsverhältnisses von besagtem variablen Frequenzteiler (76A) durch Vergleich der über das Netzwerk empfangenen Hauptphase und der in besagtem variablen Frequenzteiler (76A) in dem Empfangsknotenpunkt erzeugten Nebenphase enthält, wodurch es besagter Nebenphase erlaubt ist, besagter Hauptphase zu folgen.

## Revendications

1. Système de commande de transfert de données pour assurer la commande de transfert de données d'un système d'anneau à jeton, dans lequel la limite supérieure du temps d'attente de transmission de chaque noeud (104) est garantie, chaque dit noeud (104) servant à faire passer des données depuis/vers un terminal associé (101) qui lui est connecté, vers/depuis ledit réseau et comprenant une mémoire-tampon (112) pour y stocker temporairement lesdites données, la cadence de transmission des données au réseau étant commandé de manière à produire un retard constant, et des données de phase d'une horloge de base produite par un moyen de production d'horloge de base étant transmises à un noeud (104) différent, caractérisé par un organe de commande (114) pour commander une commande d'appel entre les noeuds (104) et une commande de transfert de données pour ladite mémoire-tampon (112) et un moyen de production d'horloge de base (6) pour produire une horloge de base vers ledit terminal (101), ledit organe de commande (114) servant à commander la cadence de transmission des données audit réseau en vue de produire le temps de retard constant, dans lequel les données de phase de l'horloge de base produite par ledit moyen de production d'horloge de base (6) sont transmises au noeud différent (104) à l'aide d'un paquet, pour obtenir une synchronisation de l'horloge de base en vue de transférer les données entre ledit noeud différent (104) et un terminal (101) qui lui est relié.

2. Système de commande de transfert de données selon la revendication 1, dans lequel ledit temps de retard constant est le double du temps d'excursion de jeton maximal dans l'anneau à jeton.

3. Système de commande de transfert de données selon la revendication 1, dans lequel la transmission de données effectuée depuis une mémoire-tampon (4) côté transmission vers la ligne de transmission d'anneau (103) est démarrée après un temps de retard prédéterminé.

4. Système de commande de transfert de données selon la revendication 1, dans lequel la transmission de données effectuée depuis une mémoire-tampon (5) côté réception vers le terminal (101) est démarrée après un temps de retard prédéterminé.

5. Système de commande de transfert de données selon la revendication 1, dans lequel le transfert de données effectué depuis la mémoire-tampon (4) côté transmission vers la ligne de transmission d'anneau (103) et le transfert de données effectué depuis la mémoire-tampon (5) côté réception vers le terminal (101) sont démarrés après des temps de retard constituant ensemble un temps de retard prédéterminé.

6. Système de commande de transfert de données selon la revendication 1, dans lequel un noeud (104), servant d'élément maître de synchronisation lors de l'établissement d'une synchronisation d'horloge entre des noeuds, comprend un moyen de production d'horloge de base (8) pour appliquer une horloge de base à un noeud associé et produire des données de phase de ladite horloge de base, sous forme de données numériques constituées de bits prédéterminés, lesdites données de phase numériques étant envoyées sous forme de paquet au réseau, un noeud servant d'esclave de synchronisation comprend un moyen de reproduction d'horloge de base (7) se servant desdites données de phase numériques reçues par le réseau, en vue de produire une commande de reproduction d'une horloge synchronisée avec ladite horloge de base et une synchronisation entre des noeuds particuliers est établie en fournissant l'horloge reproduite au terminal (101) associé.

7. Système de commande de transfert de données selon la revendication 1, dans lequel chaque noeud (104) comprend à la fois un moyen de production d'horloge de base (6) et un moyen de reproduction d'horloge de base (7).

8. Système de commande de transfert de données selon la revendication 1, dans lequel chaque noeud (104) comprend un moyen de production d'horloge de base (6) ou bien un moyen de reproduction d'horloge de base (7).

9. Système de commande de transfert de données selon la revendication 1, dans lequel ledit moyen de production d'horloge de base (6) comprend un oscillateur (61) et un diviseur de fréquence (62) pour diviser la fréquence de sortie dudit oscillateur (6) et fournir également des valeurs numériques d'étapes de division de fréquence individuelles, pour former des données de phase de ladite horloge de base.

10. Système de commande de transfert de données selon la revendication 1, dans lequel ledit moyen de production d'horloge de base (6) comprend un diviseur de fréquence (62) pour diviser la fréquence d'une horloge appliquée depuis l'extérieur, en vue de produire une horloge de base appliquée au terminal (101), tout en produisant des valeurs numériques d'étapes de division de fréquence individuelles, en vue de former des données de phase de ladite horloge de base.

11. Système de commande de transfert de données selon la revendication 6, dans lequel ledit moyen de reproduction d'horloge de base (7) comprend un registre de phase maître (71) pour conserver des données de phase numériques reçues par le réseau, un oscillateur commandé en tension (75), sa fréquence d'oscillation pouvant être commandée en fonction d'une tension de commande, un diviseur de fréquence (76) pour diviser la fréquence de sortie dudit oscillateur (75), en vue de produire une horloge à appliquer au terminal (101), tout en produisant également des valeurs numériques d'étapes de division de fréquence individuelles pour produire des données de phase de ladite horloge, un registre de phase esclave (72) pour conserver des données de phase numériques fournies par ledit diviseur de fréquence (76), un soustracteur (73) pour effectuer une soustraction entre les signaux de sortie dudit élément maître (71) et des registres de phase esclaves (72) pour produire la différence de phase et un convertisseur numérique analogique (74), pour convertir le signal de sortie numérique dudit convertisseur (73) en une tension analogique à appliquer sous forme de tension de commande dudit oscillateur commandé en tension (75).

12. Système de commande de transfert de données selon la revendication 1, dans lequel ledit moyen de production d'horloge de base (6) comprend un diviseur de fréquence variable (76A) capable de faire varier un rapport de division d'horloge et un circuit fonctionnel (73A), pour commander le rapport de division de fréquence dudit diviseur de fréquence variable (76A) par l'intermédiaire d'une comparaison entre la phase maître reçue par le réseau et la phase esclave produite dans ledit diviseur de fréquence variable (76A) dans le noeud de réception, ce qui permet à ladite phase esclave de suivre ladite phase maître.
